# EUROPÄISCHE PATENTSCHRIFT

(11) **EP 0 979 577 B1**
(45) Veröffentlichungstag und Bekanntmachung des Hinweises auf die Patenterteilung: **13.02.2002**
(21) Anmeldenummer: 98933483.4
(22) Anmeldetag: 04.05.1998
(51) Int. Cl.: H04N 5/235

(54) **VERFAHREN ZUR STEUERUNG EINER EINEN CCD-BILDWANDLER UND EINE VIDEOELEKTRONIK ENTHALTENDEN VIDEOAUSSPIEGELUNGSEINRICHTUNG FÜR EINE LAUFBILD-FILMAUFNAHMEKAMERA**
METHOD FOR CONTROLLING A VIDEO REFLECTION DEVICE CONTAINING A CCD IMAGE CONVERTER AND A VIDEO ELECTRONICS UNIT, FOR A MOTION PICTURE CAMERA
PROCEDE DE COMMANDE D'UN DISPOSITIF DE REFLEXION VIDEO CONTENANT UN CONVERTISSEUR D'IMAGE A DISPOSITIF DE COUPLAGE DE CHARGE, POUR CAMERA CINEMATOGRAPHIQUE

(30) Priorität: 02.05.1997 DE 19720148
(43) Veröffentlichungstag der Anmeldung: 16.02.2000
(73) Patentinhaber: ARNOLD & RICHTER CINE TECHNIK GMBH & CO. BETRIEBS KG, 80701 München (DE)
(72) Erfinder: NGUYEN-NHU, Anh, D-85716 Unterschleissheim (DE)
(74) Vertreter: Ninnemann, Detlef, Dipl.-Ing.
(86) Internationale Anmeldenummer: DE9801286
(87) Internationale Veröffentlichungsnummer: WO9851075

(56) Entgegenhaltungen:
- EP-A- 0 377 914
- EP-A- 0 712 236
- US-A- 4 504 866
- JACOBY H D ET AL: "ELECTRONICS IN THE NEW GENERATION OF ARRIFLEX CAMERAS" SMPTE JOURNAL, Bd. 100, Nr. 11, 1. November 1991, Seiten 880-883, XP000234956

## Beschreibung

Die Erfindung bezieht sich auf ein Verfahren zur Steuerung einer einen CCD-Bildwandler und eine Videoelektronik enthaltenden Videoausspiegelungseinrichtung für eine Laufbild-Filmaufnahmekamera gemäß dem Oberbegriff des Anspruchs 1 und eine Vorrichtung zur Durchführung des Verfahrens.

Zur Belichtung eines Laufbildfilms in einer Laufbild-Filmaufnahmekamera wird der aus einer Filmkassette abgewickelte, unbelichtete Film an einem Bildfenster intermitierend vorbeibewegt, wo er in den Strahlengang eines Aufnahmeobjektivs gelangt. Während der Belichtung des Laufbildfilmes wird der Filmstrahlengang freigegeben, während für die Dauer des Filmtransports von einem zu belichtenden Filmbild zum nachfolgenden der Strahlengang mittels einer Blende abgedeckt wird. Hat das nächste Filmbild die vorgegebene Stellung vor dem Bildfenster erreicht, wird der Strahlengang wiederum zur Belichtung des betreffenden Filmbildes freigegeben.

In Filmkameras mit rotierender Spiegelblende erfolgt die Freigabe und Abdeckung des Filmstrahlenganges beim intermitierenden Filmtransport durch eine mit dem Filmtransportmechanismus mechanisch oder elektrisch gekoppelte Spiegelblende, die in Bezug auf die Filmbelichtung eine kreissektorförmige Spiegelfläche (Dunkelsektor) und einen Öffnungssektor (Hellsektor) aufweist. Während des Filmtransports deckt die Spiegelfläche das Bildfenster ab und lenkt den Filmstrahlengang infolge der dem Filmaufnahmeobjekt zugewandten Spiegelfläche über einen oder mehrere Strahlenteiler in ein Okular, eine Videoausspiegelungseinrichtung und dergleichen um. Während des Filmtransports kann somit das Filmaufnahmeobjekt durch das Okular betrachtet und über die Videoausspiegelung aufgezeichnet bzw. zu einem Monitor übertragen werden. Der Öffnungs- oder Hellsektor der Spiegelblende gibt bei Stillstand des Laufbildfilms vor dem Bildfenster den Aufnahmestrahlengang zur Belichtung des jeweiligen Filmbildes frei.

Zur Veränderung der Belichtungszeit des Laufbildfilmes bei vorgegebener oder veränderlicher Filmtransportgeschwindigkeit wird die rotierende Spiegelblende aus zwei koaxialen Kreissektoren gebildet, die gegeneinander verstellbar sind, so daß der Blendenöffnungswinkel veränderbar ist. Eine derartige verstellbare Umlaufblende für eine Filmkamera ist beispielsweise aus der WO 90/08975 bekannt und besteht aus einer Umlaufblende und einem koaxial zu dieser verstellbaren Blendenverstellflügel, der über ein Getriebe mit einem mit der Welle der Umlaufblende gekoppelten Verstellmotor verbunden ist. Die Umlaufblendenwelle kann wahlweise vom Hauptmotor der Laufbildkamera für den Filmtransportmechanismus oder von einem eigenen Antriebsmotor angetrieben werden, der elektronisch mit dem Hauptmotor der Laufbildkamera gekoppelt bzw. mit dessen Drehzahl synchronisiert ist.

Zwischen dem Blendenverstellflügel und der Umlaufblende bzw. Umlaufblendenwelle ist eine erste Erfassungseinrichtung in Form eines analogen oder digitalen Winkelgebers angeordnet, die ein der Stellung des Blendenverstellflügels gegenüber der Umlaufblende bzw. Umlaufblendenwelle entsprechendes Signal abgibt. Eine zweite Erfassungseinrichtung in Form einer im Bereich der Umlaufblende angeordneten Lichtschranke bewirkt eine Messung der Öffnungszeit der Umlaufblende während des Laufs.

Die Veränderung des Blendenöffnungswinkels kann sowohl manuell, als auch automatisch oder programmiert vorgenommen werden, so daß die Blendenöffnung den jeweiligen Lichtverhältnissen angepaßt, bestimmte Effekte erzielt werden oder die Blendenöffnung und damit die Belichtungszeit des Laufbildfilmes der jeweiligen Filmgeschwindigkeit angepaßt werden können.

Mittels der verstellbaren Umlaufblende kann durch Verstellen des Blendenöffnungswinkels die auf den Laufbildfilm fallende Lichtmenge variiert werden. Da die den Filmstrahlengang während des Filmtransports in das Sucherokular und eine Videoausspiegelungseinrichtung ablenkende Spiegelfläche der verstellbaren Umlaufblende aber üblicherweise einen konstanten Sektorwinkel von 180° aufweist, gelangt in das Sucherokular und zur Videoausspiegelungseinrichtung eine gleichbleibende Lichtmenge, während bei einer Veränderung des Blendenöffnungswinkels beispielsweise um vier Blendenstufen von 11,75 bis 180° eine variable Lichtmenge auf den Laufbildfilm gelangt.

Bei einer unveränderten Spiegelfläche von 180° Sektorwinkel und bei gleichbleibender Umlaufgeschwindigkeit der Umlaufblende wird somit in Bezug auf die Videoausspiegelungseinrichtung das Videobild je nach den herrschenden Lichtverhältnissen zu hell oder zu dunkel. Bei einem Verstellbereich der verstellbaren Umlaufblende von 11,75° bis 180° Öffnungswinkel würde sich die zur Videoausspiegelungseinrichtung gelangende Lichtmenge um vier Blendenstufen ändern.

Eine Anpassung des Videobildes an die jeweiligen Lichtverhältnisse ließe sich mit einer automatischen Verstärkungsregelung (AGC - "automatic gain control") herstellen. Eine solche automatische Anpassung an die jeweiligen Lichtverhältnisse ist jedoch dann unerwünscht, wenn die Helligkeit auf dem Videobild mit der Helligkeit auf dem Film übereinstimmen soll, um gleiche Verhältnisse zu schaffen.

Aus der DE 42 11 427 A1 ist ein Verfahren zum Reduzieren des Helligkeitsflimmerns von Videobildern einer auf den Strahlengang einer Laufbildkamera mit einer rotierenden Spiegelblende, deren Drehzahl und Stellung von einem Sensor erfaßt und als Blenderiimpulssignal abgegeben wird, gerichteten Videokamera mit einem CCD-Bildwandler, einem Bildspeicher und einem Videosignalausgang bekannt. Bei diesem bekannten Verfahren wird die Phasenverschiebung zwischen dem Blendenimpulssignal und dem Videosynchronsignal erfaßt und die Amplitude des von der Videokamera an den Bildspeicher abgegebenen Videosignals in Abhängigkeit von der Größe der Phasenverschiebung zwischen dem Blendenimpulssignal und dem Videosynchronsignal geregelt und als Steuersignal für den spannungsgesteuerten Verstärker der Videokamera verwendet.

Das bekannte Verfahren dient zur Lösung des Problems, daß beim Einsatz von Videokameras mit hoher Lichtempfindlichkeit in Videoausspiegelungseinrichtungen einer Laufbild-Filmaufnahmekamera die Ladung des CCD-Bildwandlers bei jeder Halbbildauslesung gelöscht wird und dadurch ein starkes Helligkeitsflimmern bei einer Sucherbildausspiegelung an einer Laufbildkamera resultiert. Die dabei erfaßte Umlaufgeschwindigkeit und Phasenlage der rotierenden Spiegelblende wird als Blendenimpuls an eine Steuer- und Regeleinrichtung abgegeben, die einen Bildspeicher, einen programmierbaren Binärzähler, einen oktalen Flipflop und einen Digital-Analog-Wandler enthält. Die Verknüpfung zwischen dem Blendenimpuls und den Steuerimpulsen des CCD-Bildwandlers der Videoausspiegelungseinrichtung dient dazu, die Steuerspannung des spannungsgesteuerten Verstärkers der Videoausspiegelungseinrichtung so zu beeinflussen, daß Amplitudenschwankungen bei unterschiedlichen Laufbildgeschwindigkeiten und Videofrequenzen auf ein Minimum reduziert werden.

Das bekannte Steuerverfahren nimmt sich nicht des Problems an, daß bei einer Verwendung einer Videoausspiegelungseinrichtung mit einem CCD-Bildwandler in einer Laufbild-Filmaufnahmekamera, in die wahlweise ein hochempfindlicher oder ein weniger empfindlicher Laufbildfilm eingelegt werden kann, das von der Videoausspiegelungseinrichtung abgegebene Videosignal übersteuert wird oder eine zu geringe Amplitude aufweist.

Ein weiteres Problem besteht darin, daß bei einer Veränderung des Blendenöffnungswinkels der verstellbaren Umlaufblende der Laufbildkamera die auf den Laufbildfilm fallende Lichtmenge in der Hellphase des Blendensektors umgekehrt proportional zu der auf den CCD-Bildwandler fallenden Lichtmenge in der Dunkelphase des Blendensektors ist. Dadurch können Belichtungsunterschiede von bis zu vier Blendenstufen auftreten.

Beide Probleme führen unabhängig voneinander dazu, daß die Helligkeit der Filmbilder erheblich von der Helligkeit der Videobilder abweichen kann. Damit kann aber auch der visuelle Eindruck einer Filmaufnahmesequenz, die auf einem Videobild wiedergegeben wird, erheblich von dem visuellen Eindruck abweichen, den die Sequenz auf dem Laufbildfilm vermittelt.

Aufgabe der vorliegenden Erfindung ist es, ein Verfahren zur Steuerung einer einen CCD-Bildwandler und eine Videoelektronik enthaltenden Videoausspiegelungseinrichtung zu schaffen, das eine Anpassung des Videobildes an unterschiedliche Lichtverhältnisse und/oder Blendenöffnungswinkel der verstellbaren Umlaufblende gewährleistet.

Diese Aufgabe wird erfindungsgemäß durch die Merkmale des Anspruchs 1 gelöst.

Die erfindungsgemäße Lösung gewährleistet, daß bei unterschiedlichen Lichtverhältnissen bzw. unterschiedlichen Blendenöffnungswinkeln der verstellbaren Umlaufblende eine vorgegebene, der Filmbelichtung entsprechende Lichtmenge von der Videoausspiegelungseinrichtung verarbeitet wird. Damit kann das Videobild bei einer gleichbleibenden Spiegelfläche von beispielsweise 180° bei einer Veränderung des Blendenöffnungswinkels zur Veränderung der Belichtungszeit des Laufbildfilmes um mindestens vier Blendenstufen variiert und damit der Belichtung des Filmbildes angepaßt werden.

Vorzugsweise legt die Blendenlogik den Zeitpunkt und die Zeitdauer der Aufladung des CCD-Bildwandlers in Abhängigkeit vom Blendenöffnungswinkel derart fest, daß die Belichtungszeit des CCD-Bildwandlers und damit die aufgenommende Lichtmenge proportional zur Filmbelichtungszeit ist.

Diese Steuerung ermöglicht es, die Belichtungsverhältnisse der Videoausspiegelungseinrichtung mit geringem schaltungstechnischen Aufwand sehr schnell Veränderungen der Filmbelichtung anzupassen.

In einer vorteilhaften Ausgestaltung der erfindungsgemäßen Lösung steuert die Blendenlogik die Substratspannung des CCD-Bildwandlers derart an, daß der CCD-Bildwandler während der Ausblendung des Filmbelichtungs-Strahlenganges ständig entladen wird.

Alternativ hierzu steuert die Blendenlogik die Substratspannung des CCD-Bildwandlers derart an, daß der CCD-Bildwandler entladen wird, bevor er in Abhängigkeit von der von der Blendenlogik ermittelten Belichtungszeit des CCD-Bildwandlers aufgeladen wird.

Mit dieser Steuerung der Blendenlogik können eine unmittelbar zuvor in der Filmbelichtungsphase erfaßte Veränderung der Filmbelichtung umgesetzt und gleiche Verhältnisse bei der Aufladung des CCD-Bildwandlers wie bei der Filmbelichtung geschaffen werden.

Vorzugsweise verknüpft die Blendenlogik die Videotaktfrequenz mit dem von einem ersten Sensor erfaßten Blendenöffnungswinkel und/oder der von einem zweiten Sensor erfaßten Stellung der verstellbaren Umlaufblende.

Dies ermöglicht eine Steuerung der Aufladung des CCD-Bildwandlers in Abhängigkeit von der eingestellten oder vorgegebenen Filmbelichtung sowohl im Stillstand bzw. aus dem Stillstand der Filmkamera heraus als auch während des Laufs des Filmtransportmechanismus.

Eine Vorrichtung zur Durchführung des Verfahrens ist dadurch gekennzeichnet, daß ein Mikroprozessor eingangsseitig mit einem von der Videoelektronik abgegebenen Videotaktsignal beaufschlagt wird und mit dem Ausgang mindestens eines den Blendenöffnungswinkel und/oder die Stellung der verstellbaren Umlaufblende erfassenden Sensors und ausgangsseitig mit einem Taktgenerator verbunden ist, und daß der ebenfalls mit dem Videotaktsignal beaufschlagte Taktgenerator ausgangsseitig den CCD-Bildwandler ansteuert und Ausgangssignale an eine Blendenlogik abgibt, die diese Signale verknüpft und ein Steuersignal abgibt, mit dem die jeweils gespeicherte Ladung des CCD-Bildwandlers wieder entladen wird, wenn der Blendenöffnungswinkel der verstellbaren Umlaufblende on einem vorgegebenen Wert abweicht, wobei die Blendenlogik das Steuersignal an ein nachgeschaltetes, die Substratspannung des CCD-Bildwandlers beeinflussendes Bauelement abgibt, das die Substratspannung zur Entladung des CCD-Bildwandlers taktet.

Anhand eines in der Zeichnung dargestellten Ausführungsbeispieles soll der der Erfindung zugrundeliegende Gedanke näher erläutert werden. Es zeigen:
- Figur 1 -: eine schematische Darstellung des Strahlenganges in einer Laufbildkamera mit rotierender Spiegelblende und einer Videoausspiegelungseinrichtung;
- Figur 2 -: ein Blockschaltbild der Videobildsteuerung und
- Figuren 3 bis 5 -: schematische zeitliche Darstellungen der Filmbelichtung und Ansteuersignale des CCD-Bildwandlers bei unterschiedlichen Blendenöffnungswinkeln.

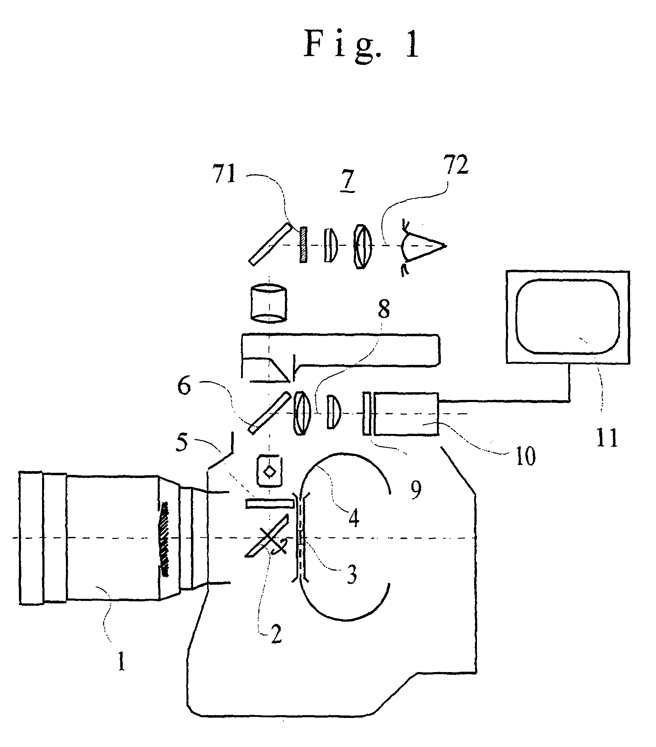

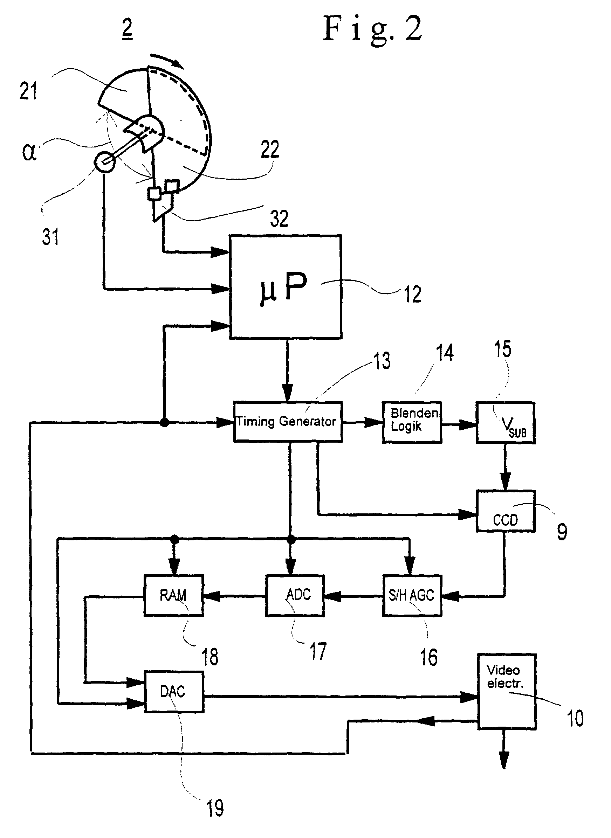

Das in Figur 1 schematisch dargestellte optische System einer Laufbildkamera mit Videoausspiegelung zeigt ein Aufnahmeobjektiv 1, durch das ein Aufnahmestrahlengang in die Filmkamera eintritt und auf eine rotierende Spiegelblende 2 trifft. Die rotierende Spiegelblende 2 setzt sich gemäß Figur 2 aus einer halbkreisförmigen Spiegelfläche 21 mit einem Umfangswinkel von üblicherweise 180° und einem koaxial zur Spiegelfläche 21 angeordneten Blendenverstellflügel 22 zusammen, der gegenüber der Spiegelfläche 21 verstellbar ist, so daß theoretisch Blendenöffnungswinkel α von 0° bis 180° der rotierenden Spiegelblende 2 eingestellt werden können.

Je nach Winkelstellung der rotierenden Spiegelblende 2 trifft der Aufnahmestrahlengang auf den Öffnungssektor (Hellsektor) und gelangt durch diesen als Filmbelichtungsstrahlengang durch ein Bildfenster 3 auf einen in einem Filmkanal geführten Laufbildfilm 4. Während des Transports des Laufbildfilms 4 wird das Bildfenster 3 durch die Spiegelfläche 21 der rotierenden Spiegelblende 2 abgedeckt und der Aufnahmestrahlengang als Sucher- und Videostrahlengang auf eine Mattscheibe oder Faserplatte 5 abgelenkt, von wo aus der Strahlengang parallel versetzt durch eine Umlenkeinrichtung auf einen Strahlenteiler 6 gelangt, der den von der rotierenden Spiegelblende 2 abgelenkten Aufnahmestrahlengang in einen Sucherstrahlengang und einen Videostrahlengang aufspaltet.

Der Sucherstrahlengang durchtritt eine Planscheibe 71 und ein Okular 72 einer Sucheroptik 7. Das Okular 72 ermöglicht dabei die Betrachtung des zwischen der Planscheibe 71 und dem Okular 72 als Luftbild erzeugten Sucherbildes.

Der Videostrahlengang gelangt durch eine Videooptik 8 auf einen CCD-Bildwandler 9, der mit einer Videoelektronik 10 verbunden ist. Ein von der Videoelektronik 10 abgegebenes Videosignal kann in üblicher Weise weitergeleitet bzw. weiterverarbeitet und beispielsweise einem Monitor 11, auf dem ein Videobild des Aufnahmeobjekts dargestellt werden kann, oder einem Videoaufzeichnungsgerät zugeführt werden, das die Videoaufnahmen speichert.

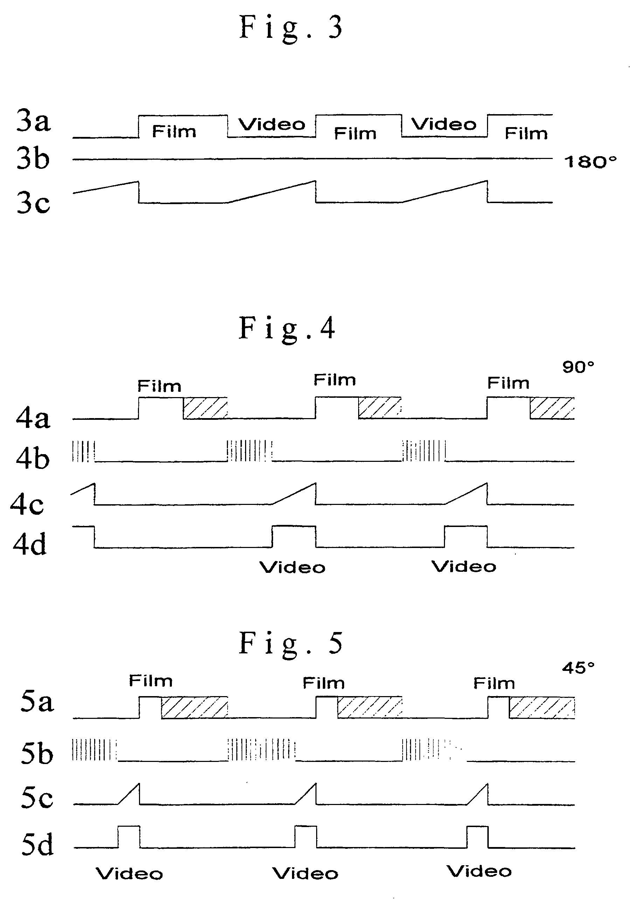

Die Figuren 3a, 4a und 5a verdeutlichen in einer schematischen, zeitlichen Darstellung die auf den Laufbildfilm und den CCD-Bildwandler der Videoausspiegelungseinrichtung gelangenden Lichtmengen bei unterschiedlichen Blendenöffnungswinkeln.

Bei einem Blendenöffnungswinkel von 180°, das heißt bei einem deckungsgleich zur 180°-Spiegelfläche 21 der rotierenden Spiegelblende 2 angeordneten Blendenverstellflügel 22 gelangen gleiche Lichtmengen sowohl auf den Laufbildfilm als auch auf den CCD-Bildwandler (Figur 3a).

Figur 4a zeigt, daß bei einem Blendenöffnungswinkel von 90° infolge der 180°-Spiegelfläche 21 der rotierenden Spiegelblende 2 eine unveränderte Lichtmenge auf den CCD-Bildwandler fallen würde, während die auf den Laufbildfilm gelangende Lichtmenge halbiert wird (die schraffierte Fläche deutet die Ausblendung des Filmbelichtungsstrahlenganges durch den Blendenverstellflügel gegenüber dessen vollständiger Öffnung an), so daß das Verhältnis zwischen Filmlichtmenge und Videolichtmenge 1 : 2 betragen würde.

Bei einem weiteren Schließen des Blendenverstellflügels würde gemäß Figur 5a bei einem Blendenöffnungswinkel von 45° bei weiterhin unveränderter, auf den CCD-Bildwandler fallender Lichtmenge ein Viertel der Lichtmenge auf den Laufbildfilm gelenkt, so daß das Lichtmengenverhältnis zwischen Filmbelichtung und Belichtung des CCD-Bildwandlers 1 : 4 betragen würde.

Die in den Figur 3a, 4a und 5a dargestellten Verhältnisse verdeutlichen, daß bei gleichbleibender Umlaufgeschwindigkeit der rotierenden Spiegelblende und einem Verstellbereich der rotierenden Spiegelblende von beispielsweise 10° bis 180° die auf den CCD-Bildwandler gelangende Lichtmenge um vier Blendenstufen erhöht wird, wenn der Blendenöffnungswinkel entsprechend von 180° auf beispielsweise 10° verringert wird.

Figur 2 zeigt in einem schematischen Blockschaltbild die schaltungstechnische Anordnung zur Realisierung einer vom Blendenöffnungswinkel abhängigen Belichtungssteuerung des CCD-Bildwandlers.

Die verstellbare Umlaufblende 2 besteht in der vorstehend beschriebenen Weise aus einer halbkreisscheibenförmigen Spiegelfläche 21 und einem Blendenverstellflügel 22, der koaxial zur halbkreisscheibenförmigen Spiegelfläche 21 angeordnet und manuell oder motorisch im Stillstand oder im Lauf gegenüber der Spiegelfläche 21 verstellbar ist. Der Blendenöffnungswinkel α bestimmt bei vorgegebener Umlaufgeschwindigkeit der verstellbaren Umlaufblende 2 bzw. Transportgeschwindigkeit des Laufbildfilms die auf den Laufbildfilm zur Belichtung eines Filmbildes fallende Lichtmenge.

Der Blendenöffnungswinkel α kann vorzugsweise mittels eines mit der Blendenverstellwelle verbundenen Potentiometers, mittels eines elektrooptischen, magnetischen oder dergleichen Sensors 31 und/oder mittels eines analogen oder digitalen Winkelgebers 32 entsprechend der WO 90/08975 sowohl im Stillstand als auch im Lauf erfaßt werden. Beide Sensoren 31, 32 können sowohl zur Erfassung des Blendenöffnungswinkels und der Position der Umlaufblende als auch für eine Feinkorrektur eingesetzt werden.

Das Ausgangssignal des bzw. der Sensoren 31, 32 wird zusammen mit einem von einer Videoelektronik 10 abgegebenen Videotaktsignal einem Mikroprozessor 12 zugeführt, dessen Ausgang mit dem Eingang eines Taktgenerators 13 verbunden ist. An einem weiteren Eingang des Taktgenerators 13 liegt das Videotaktsignal an. Der Taktgenerator 13 steuert eine Blendenlogik 14 sowie den CCD-Bildwandler 9 sowie eine Ausleseschaltung des CCD-Bildwandlers 9 an, die aus einem Abtast-Halteverstärker mit automatischer Vertärkungsregelung (AGC) 16, einem Analcg-Digital-Wandler 17, einem Speicherelement 18 und einem Digital-Analog-Wandler 19 besteht, dessen Ausgang mit der Videoelektronik 10 verbunden ist. Die Videoelektronik 10 gibt sowohl das Videotaktsignal an den Mikroprozessor 12 und den Taktgenerator 13 als auch das Videosignal an ein Aufzeichnungsgerät, einen Monitor oder dgl. ab.

Die Blendenlogik 14 ist ausgangsseitig über ein die Substratspannung V_{SUB} des CCD-Bildwandlers 9 beeinflussendes Bauelement 15 mit dem CCD-Bildwandler 9 verbunden, der ausgangsseitig an einen Eingang des Abtast-Halteverstärkers mit automatischer Vertärkungsregelung 16 angeschlossen ist.

Nachfolgend soll die Funktionsweise der in Figur 2 dargestellten Schaltungsanordnung anhand des zeitlichen Verlaufs der Steuer- und Belichtungssignale gemäß den Figur 3 bis 5 näher erläutert werden.

Der Lösungsansatz zur Angleichung des Video-Ausgangssignals an die Größe des Blendenöffnungswinkels und damit an die Filmbelichtung geht von den physikalischen Eigenschaften eines CCD-Bildwandlers aus. Dieser besteht aus einer Vielzahl von matrixförmig angeordneten Halbleiterbauelementen als photoelektronische Lichtempfänger, die eine Zerlegung der vom Kameraobjektiv entworfenen optischen Bilder in einzelne Bildelemente und ihre Umwandlung in elektrische Signale ermöglichen. Sie sind mit zeilenweise untereinander verbundenen, ladungsgekoppelten Bauelementen (CCD-Elementen) elektrisch leitend verbunden, die die von ihnen kommenden elektrischen Signale vorübergehend speichern (Ladungsbild), ehe sie durch hochfrequente Taktimpulse abgerufen und in Videosignale umgewandelt werden. Ihre Funktion beruht auf der Verschiebung von elektrischen Ladungen im Innern einer CCD-Kette durch von außen an ihre Steuerelektroden angelegte Taktimpulsspannungen sowie einer kapazitiven Auskopplung der sich ergebenden elektrischen Signale an einen gemeinsamen Signalausgang.

Figur 3a zeigt - wie vorstehend erläutert - die auf ein Filmbild sowie auf den CCD-Bildwandler fallende Lichtmenge bei einem Blendenöffnungswinkel von 180°. Sowohl das Filmbild, als auch der CCD-Bildwandler erhalten in ihrer jeweiligen Belichtungsphase die gleiche Lichtmenge. Bei konstanter Substratspannung V_{SUB} (Figur 3b) baut sich im CCD-Bildwandler gemäß Figur 5c eine Speicherladung entsprechend der vorstehend beschriebenen Funktionsweise eines CCD-Bildwandlers auf, die am Ende der Belichtung des CCD-Bildwandlers ausgelesen, abgespeichert und in der nachfolgenden Filmbelichtungsperiode an die Videoelektronik ausgegeben wird.

Figur 4 zeigt Belichtungsverhältnisse eines Filmbildes und des CCD-Bildwandlers bei einem Blendenöffnungswinkel von 90°. Die auf ein Filmbild fallende Lichtmenge beträgt gemäß Figur 4a nur noch 50% der Lichtmenge bei einem Blendenöffnungswinkel von 180°, da die die Abdeckung des Bildfensters durch den Blendenverstellflügel angebende schraffierte Fläche zur Filmbildbelichtung entfällt.

Um die Belichtungsverhältnisse des CCD-Bildwandlers an die Belichtungsverhältnisse des Filmbildes anzupassen, wird die Substratspannung V_{SUB} getaktet und die Impulsfolge an den CCD-Bildwandler abgegeben, so daß die in dieser Zeitdauer jeweils gespeicherte Ladung des CCD-Bildwandlers wieder entladen wird (Figur 4b). Die Zeitdauer der gepulsten Substratspannung wird in Abhängigkeit vom Blendenöffnungswinkel α gesteuert, so daß gemäß Figur 4c die nach Beendigung der getakteten Substratspannung im CCD-Bildwandler gespeicherte Ladungsmenge einer in Figur 4d dargestellten Belichtung entspricht, die gleich der Belichtung des Filmbildes bei einem Blendenöffnungswinkel von 45° ist.

Zur Verdeutlichung der Funktionsweise der erfindungsgemäßen Anordnung sind in Figur 5 die entsprechenden Signale bei einem Blendenöffnungswinkel von 45° dargestellt.

Die in den Figuren 3 bis 5 dargestellten Lichtmengen bzw. Signale verdeutlichen, daß das Videosignal durch ständiges Entladen des CCD-Bildwandlers in der Ausblendzeit der Filmbildbelichtung angepaßt wird, so daß das Verhältnis der Belichtung des Filmbildes und der Amplitude des Videosignals 1 : 1 beträgt und damit unabhängig von einer automatischen Verstärkung des Videobildes eine Anpassung des Videosignals an den Blendenöffnungswinkel erfolgt.

In analoger Weise kann die erfindungsgemäße Blendensteuerung auch bei CCD-Bildwandlern mit "progressive scan" mit entsprechend angepaßter Blendenlogik angewendet werden.

## Patentansprüche

1. Verfahren zur Steuerung einer einen CCD-Bildwandler (9) und eine Videoelektronik (10) enthaltenden Videoausspiegelungseinrichtung (6, 8) für eine Laufbild-Filmaufnahmekamera zum Transport und zur Belichtung eines Laufbildfilms (4) mit einer verstellbaren Spiegel- oder Umlaufblende (2), deren Spiegelfläche (Dunkelsektor 21, Blendenverstellflügel 22) den Aufnahmestrahlengang zumindest zur Videoausspiegelungseinrichtung (6, 8) reflektiert, deren Öffnungssektor (Hellsektor, Blendenöffnungswinkel α) den Aufnahmestrahlengang zur Filmbelichtung freigibt und deren Blendenöffnungswinkel (α) von einen Sensor (31, 32) erfaßt wird,
**dadurch gekennzeichnet,**
**daß** die Belichtungszeit des CCD-Bildwandlers (9) in Abhängigkeit vom Blendenöffnungswinkel (α) gesteuert wird.

2. Verfahren nach Anspruch 1, **dadurch gekennzeichnet, daß** die Belichtungszeit des CCD-Bildwandlers (9) mit steigendem Blendenöffnungswinkel (α) verlängert, vorzugsweise gleich der Filmbelichtungszeit eingestellt wird.

3. Verfahren nach Anspruch 1 oder 2, **dadurch gekennzeichnet, daß** zur Veränderung zur Belichtungszeit des CCD-Bildwandlers (9) der Zeitpunkt und die Zeitdauer der Aufladung des CCD-Bildwandlers (9) in Abhängigkeit vom Blendenöffnungswinkel (α) festgelegt wird.

4. Verfahren nach mindestens einem der vorangehenden Ansprüche, **dadurch gekennzeichnet, daß** die Substratspannung (V_{SUB}) des CCD-Bildwandlers (9) derart angesteuert wird, daß der CCD-Bildwandler (9) während der Ausblendung des Filmbelichtungs-Strahlenganges ständig entladen wird.

5. Verfahren nach mindestens einem der vorangehenden Ansprüche 1 bis 3, **dadurch gekennzeichnet, daß** die Substratspannung (V_{SUB}) des CCD-Bildwandlers (9) derart angesteuert wird, daß der CCD-Bildwandler (9) entladen wird bevor er in Abhängigkeit von der von der Blendenlogik (14) ermittelten Belichtungszeit des CCD-Bildwandlers (9) aufgeladen wird.

6. Verfahren nach mindestens einem der vorangehenden Ansprüche, **dadurch gekennzeichnet, daß** die Videotaktfrequenz mit dem von einem ersten Sensor (31) erfaßten Blendenöffnungswinkel (*α*) und/oder der von einem zweiten Sensor (32) erfaßten Stellung der verstellbaren Umlaufblende (2) verknüpft wird.

7. Vorrichtung zur Durchführung des Verfahrens nach mindestens einem der vorangehenden Ansprüche, **dadurch gekennzeichnet,**
**daß** ein Mikroprozessor (12) eingangsseitig mit einem von der Videoelektronik (10) abgegebenen Videotaktsignal beaufschlagt wird und mit dem Ausgang mindestens eines den Blendenöffnungswinkel (α) und/oder die Stellung der verstellbaren Umlaufblende (2) erfassenden Sensors (31, 32) und ausgangsseitig mit einem Taktgenerator (13) verbunden ist,
und **daß** der ebenfalls mit dem Videotaktsignal beaufschlagte Taktgenerator (13) ausgangsseitig den CCD-Bildwandler (9) ansteuert und Ausgangssignale an eine Blendenlogik (14) abgibt, die diese Signale verknüpft und ein Steuersignal abgibt, mit dem die jeweils gespeicherte Ladung des CCD-Bildwandlers (9) wieder entladen wird, wenn der Blendenöffnungswinkel (α) der verstellbaren Umlaufblende (2) von einem vorgegebenen Wert abweicht.

8. Vorrichtung nach Anspruch 7, **dadurch gekennzeichnet, daß** die Blendenlogik (14) das Steuersignal an ein nachgeschaltetes, die Substratspannung des CCD-Bildwandlers (9) beeinflussendes Bauelement (15) abgibt, das die Substratspannung zur Entladung des CCD-Bildwandlers (9) taktet.

## Claims

1. A method for controlling a video reflection device (6,8) for a motion picture camera containing a CCD image sensor (9) and a video electronic mechanism (10) for transporting and exposing a motion picture film (4) with an adjustable reflection or rotation filter (2), the reflection surface (dark sector 21, filter adjustment vanes 22) of which reflects the recording path of rays at least to the video reflection device (6,8), the opening sector (light sector, filter opening angle α) of which releases the recording path of rays for film exposure, and the filter opening angle (α) of which is recorded by a sensor (31,32)
**characterised in that**
the exposure time of the CCD image sensor (9) is controlled dependent upon the filter opening angle (α).

2. A method according to Claim 1 **characterised in that** the exposure time of the CCD image sensor (9) is extended with an increased filter opening angle (α), preferably adjusted equal to the film exposure time.

3. A method according to Claim 1 or Claim 2 **characterised in that** for the purpose of changing the exposure time of the CCD image sensor (9) the time and the duration of the charging of the CCD image sensor (9) is fixed depending upon the filter opening angle (α).

4. A method according to at least one of the preceding claims **characterised in that** the substratum voltage (V_{SUB}) of the CCD image sensor 9 is controlled in such a way that the CCD image sensor 9 is constantly discharged during the fading-out of the film exposure path of rays.

5. A method according to at least one of the preceding claims **characterised in that** the substratum voltage (V_{SUB}) of the CCD image sensor (9) is controlled in such a way that the CCD image sensor is discharged before it is charged depending upon the exposure time of the CCD image sensor determined by the filter logic (14).

6. A method according to at least one of the preceding claims **characterised in that** the video timing frequency is connected to the filter opening angle (α) recorded by a first sensor (31) and / or the position of the adjustable rotation filter recorded by a second sensor (32).

7. A device for implementing the method according to at least one of the preceding claims **characterised in that**
a microprocessor (12) on the input side is struck with a video timing signal emitted by the video electronic mechanism (10) and with the output of at least one sensor (31, 32) recording the filter opening angle (α) and / or the position of the adjustable rotation filter (2) and on the output side is connected to a timing generator (13),
and that the timing generator (13) which is also struck with the video timing signal controls the CCD image sensor on the output side and emits output signals to a filter logic (14) which connects these signals and emits a control signal with which the respective stored charge of the CCD image sensor (9) is once again discharged if the filter opening angle (α) of the adjustable rotation filter (2) deviates from a prescribed value.

8. A device according to Claim 7 **characterised in that** the filter logic (14) emits the control signal to a component (15) which is subsequently switched and which influences the substratum voltage of the CCD image sensor (9), whereby the component times the substratum voltage for the purpose of discharging the CCD image sensor (9).

## Revendications

1. Procédé pour commander un dispositif de réflexion vidéo (6, 8), qui contient un convertisseur d'images CCD (9) et un système électronique vidéo (10), pour une caméra d'enregistrement à film cinématographique pour le transfert et l'exposition d'un film cinématographique (4) comportant un diaphragme à miroir ou un diaphragme rotatif (2) réglable, dont la surface réfléchissante (secteur sombre 21, ailette réglable de diaphragme 22) réfléchit le trajet du faisceau d'enregistrement au moins en direction du dispositif de réflexion vidéo (6, 8), dont le secteur d'ouverture (secteur clair, secteur lumineux, angle d'ouverture du diaphragme α) libère le trajet du faisceau d'enregistrement pour l'exposition du film et dont l'angle d'ouverture de diaphragme (22) est détecté par un capteur (31, 32), **caractérisé en ce que** la durée d'exposition du convertisseur d'images CCD (9) est commandée en fonction de l'angle d'ouverture (α) du diaphragme.

2. Procédé selon la revendication 1, **caractérisé en ce que** la durée d'exposition du convertisseur d'images CCD (9) est allongée lorsque l'angle d'ouverture (α) du diaphragme augmente et de préférence est réglée égale à la durée d'exposition du film.

3. Procédé selon la revendication 1 ou 2, **caractérisé en ce que** pour modifier la durée d'exposition du convertisseur d'images CCD (9), l'instant et la durée de la charge du convertisseur d'image CCD (9) sont fixés en fonction de l'angle d'ouverture (α) du diaphragme.

4. Procédé selon au moins l'une des revendications précédentes, **caractérisé en ce que** la tension (V_{SUB}) de substrat du convertisseur d'images CCD (9) est commandée de telle sorte que le convertisseur d'images CCD (9) est chargé en permanence, pendant la diaphragmation du trajet de rayonnement d'exposition du film.

5. Procédé selon au moins l'une des revendications précédentes 1 à 3, **caractérisé en ce que** la tension de substrat (V_{SUB}) du convertisseur d'images CCD (9) est commandée de telle sorte que le convertisseur d'images CCD (9) est déchargé avant qu'il soit chargé en fonction de la durée d'exposition, déterminée par la logique (14) du diaphragme, du convertisseur d'images CCD (9).

6. Procédé selon au moins l'une des revendications précédentes, **caractérisé en ce que** la fréquence de cadence vidéo est combinée à l'angle d'ouverture (α) du diaphragme, qui est détectée par un premier capteur (31), et/ou est combinée à la position, détectée par un second capteur (32), du diaphragme rotatif réglable (2).

7. Dispositif pour la mise en oeuvre du procédé selon au moins l'une des revendications précédentes, **caractérisé en ce qu'**un microprocesseur (12) est chargé, côté entrée, par un signal de cadence vidéo délivré par l'unité électronique vidéo (10) et est relié à la sortie d'au moins un capteur (31, 32), qui détecte l'angle d'ouverture (α) du diaphragme et/ou la position du diaphragme rotatif réglable (2), et est reliée côté sortie à un générateur de cadence (13), et
que le générateur de cadence (13), qui est également chargé par le signal de cadence vidéo, commande côté sortie le convertisseur d'images CCD (9) et délivre des signaux de sortie à une logique (14) du diaphragme, qui combine ces signaux et délivre un signal de commande, à l'aide duquel la charge respectivement mémorisée du convertisseur d'images CCD (9) est à nouveau déchargée, lorsque l'angle d'ouverture (α) du diaphragme rotatif réglable (2) s'écarte d'une valeur prédéterminée.

8. Dispositif selon la revendication 7, **caractérisé en ce que** la logique (14) du diaphragme délivre le signal de commande à un composant (15), qui est branché en aval, influe sur la tension de substrat du convertisseur d'images CCD (9) et commande de façon cadencée la tension de substrat pour décharger le convertisseur d'images CCD (9).
